# EUROPÄISCHE PATENTSCHRIFT

(11) **EP 1 655 599 B1**
(45) Veröffentlichungstag und Bekanntmachung des Hinweises auf die Patenterteilung: **19.09.2012**
(21) Anmeldenummer: 05022479.9
(22) Anmeldetag: 14.10.2005
(51) Int. Cl.: G01N 21/89, G01N 33/36

(54) **Garnsensor**
Yarn sensor
Détecteur de fil

(30) Priorität: 06.11.2004 DE 102004053735
(43) Veröffentlichungstag der Anmeldung: 10.05.2006
(73) Patentinhaber: Oerlikon Textile GmbH & Co. KG, 42897 Remscheid (DE)
(72) Erfinder: Birlem, Olav, 41812 Erkelenz (DE)
(74) Vertreter: Hamann, Arndt

(56) Entgegenhaltungen:
- EP-A- 0 401 600
- EP-A- 0 761 585
- EP-A- 1 018 645
- EP-A- 1 035 059
- WO-A-93/13407
- WO-A-93/19359
- WO-A-2005/068985

## Beschreibung

Die Erfindung betrifft einen Garnsensor zum optischen Abtasten eines in seiner Längsrichtung in einem Messspalt bewegten Garnes, insbesondere zum Detektieren von Fremdfasern, gemäß dem Oberbegriff des Anspruchs 1.

Die EP 1 018 645 B1 beschreibt einen Garnsensor zum Erkennen von Fremdstoffen im Garn, bei dem als Lichtquelle eine Weißlichtleuchtdiode dient. Eine Weißlichtleuchtdiode erlaubt eine kompakte Ausführung des Garnsensors. Das breite Farbspektrum der Weißlichtleuchtdiode verhindert, dass eine ungleiche Farbsensitivität des Garnsensors auftritt oder Farben nicht erkannt werden. Die detektierten Messwerte werden auf Merkmale untersucht, die auf das Auftreten von Fremdstoffen im Garn, wie zum Beispiel Fremdfasern, schließen lassen.

Die EP 1 035 059 A2 beschäftigt sich mit der Verschmutzung von Bauteilen optischer Garnüberwachungsvorrichtungen. Eine lichtdurchlässige Beschichtung soll der Verschmutzung von Bauelementen, wie Lichtquelle, Sensor oder Linse entgegenwirken, um so die erforderlichen Reinigungsintervalle zu vergrößern. Gleichzeitig soll die Beschichtung den Folgen der Verschmutzung entgegenwirken, wie zum Beispiel den Verschleiß an der Oberfläche der Bauelemente infolge mechanischer Einwirkung, insbesondere beim Reinigen der Oberfläche.

Die EP 0 401 600 A2 offenbart eine Vorrichtung zur Überwachung von Parametern eines laufenden Prüfgutes. Die Abhängigkeit von Fremdeinflüssen, wie beispielsweise Feuchtigkeit, Form des Garnquerschnitts, Positionsabhängigkeit oder Materialeinfluss, soll dadurch reduziert werden, dass ein optisches und ein kapazitives Messverfahren miteinander kombiniert werden.

Die WO 93/19359 offenbart ein Verfahren zur Detektion von Verunreinigungen in einem textilen Prüfgut von der Art eines Garnes, wobei der der Einfluss des Durchmessers des Garnes kompensiert wird.

Die gattungsbildende EP 0 761 585 A1 beschreibt einen Garnsensor, der ebenfalls neben der Bestimmung des Garndurchmessers zur Erkennung von Fremdmaterial im Garn, wie Fremdfasern oder Verunreinigungen, dienen kann. Bei Garnsensoren ist das Ablagern von Schmutz, wie zum Beispiel Staub und Faserteilchen, auf vor Verschmutzung ungeschützten Oberflächen des Messspaltes unvermeidlich. Es tritt zwar im Messspalt ein gewisser Selbstreinigungseffekt auf, der von dem durch den Messspalt bewegten Garn bewirkt wird. Dieser bekannte Selbstreinigungseffekt kann jedoch nicht verhindern, dass Oberflächen im Messspalt, die von der Lichtquelle bestrahlt werden, zumindest temporär verschmutzen. Wenn beispielsweise die Schutzscheibe zwischen Garn und dem Empfänger für direkt übertragenes Licht verschmutzt, findet nicht nur eine Reduzierung der auf diesen Empfänger auftreffenden Lichtmenge statt, sondern die Schmutzteilchen reflektieren auch von der Lichtquelle abgestrahltes auftreffendes Licht. Das vom Garn reflektierte Licht stellt aufgrund der kleinen Oberfläche des Garns eine relativ geringe Signalquelle dar. Das in Strom umgewandelte Fadensignal bewegt sich im Nanoamperebereich. Die gegenüber der geringen bestrahlten Fläche des Garns relativ große, mit Schmutz behaftete Oberfläche im Messspalt stellt wegen ihrer Ausdehnung eine nicht unerhebliche Reflexionssignalquelle dar. Die das Messergebnis verfälschende Störstrahlung wird auch als parasitäres Signal bezeichnet. Aufgrund der geringen Stärke des Fadensignals erfolgt eine hohe Verstärkung des aus der Lichteinstrahlung am Garn umgewandelten Signals, aber auch der parasitären Signale. Dies führt zu einem Nutzsignal, das im Verhältnis zum Gesamtsignal unzulässig gering ist.

Sowohl der Garnsensor nach der EP 1 018 645 B1 als auch der Garnsensor nach der EP 0 761 585 A1 und die Vorrichtungen der übrigen zitierten Schriften vermögen diesen Nachteil nicht zu beheben.

Es ist Aufgabe der Erfindung, den bekannten Garnsensor zu verbessern.

Diese Aufgabe wird mit einem Garnsensor mit den Merkmalen des Anspruchs 1 gelöst.

Vorteilhafte Weiterbildungen der Erfindung sind Gegenstand der Unteransprüche.

Die erfindungsgemäße Ausbildung des Garnsensors bewirkt, dass im Wesentlichen nur vom Garn reflektiertes Licht der Lichtquelle die zwei Empfänger für reflektiertes Licht erreicht. Störungen und Verfälschungen durch parasitäre Signale lassen sich deutlich einschränken. Die Messempfindlichkeit des Garnsensors kann sensibler eingestellt werden.

Vorteilhaft ist die Lichtquelle eine Leuchtdiode. Leuchtdioden benötigen nur wenig Bauraum und eignen sich daher besonders gut für den Einsatz an Arbeitsstellen von Spinn- oder Spulmaschinen, an denen nur sehr begrenzt Bauraum zur Verfügung steht. Die Leuchtdiode ist vorzugsweise als Weißlichtleuchtdiode ausgebildet. Das Farbspektrum der Weißlichtleuchtdiode bietet bei der Farberkennung alle Möglichkeiten. Kostengünstig kann auf den Einsatz zusätzlicher Leuchtdioden mit Licht in anderen Farben verzichtet und der benötigte Bauraum gering gehalten werden. Da eine als alleinige Lichtquelle dienende Weißlichtleuchtdiode Licht in allen benötigten Farben emittiert, wird eine gleich bleibende Sensitivität des Garnsensors gegenüber unterschiedlichen Farben ermöglicht. Eine einzige Weißlichtleuchtdiode kommt dem Modell einer Punktlichtquelle wesentlich näher als eine Anordnung aus zwei oder mehreren Leuchtdioden.

Mit einer Ausbildung nach Anspruch 4 oder 5 wird eine derart vergleichmäßigte Ausleuchtung des Messspaltes erreicht, dass ein verfälschender Einfluss auf die generierten Sensorsignale, der abhängig von der Position des Garns im Messspalt ist, weitestgehend vermieden wird.

Durch die Ausbildung des Garnsensors nach Anspruch 6 wird ermöglicht, dass sich das Garn in einem Licht bewegt, das aus sehr homogener quasiparalleler Strahlung besteht. Streulicht, das außerhalb des gewollt bestrahlten Bereiches auf die Messspaltoberfläche auftrifft, wird minimiert oder ganz unterdrückt. Die Messsignale werden nicht geschwächt.

Sind die Elemente zum Übertragen des Lichts durch Fenster vom Messspalt getrennt, wobei die Fenster Glasscheiben umfassen können, wird ein Schutz der Elemente zum Übertragen des Lichts bewirkt.

Eine Blende nach Anspruch 8 begrenzt das auf das Garn gerichtete Lichtbündel derart, dass nur Flächen beleuchtet werden, die keine Reflexe verursachen, die zu parasitären Signalen führen.

Auch mit der Anordnung einer Blende im Strahlengang des vom Garn reflektierten Lichtes zum Empfänger nach Anspruch 9 oder 10 lassen sich unerwünschte Reflexe vermeiden, die parasitäre Signale erzeugen. Die Homogenität des Lichtes im auf den Empfänger gerichteten Lichtbündel kann verbessert werden.

Bei der Messung fließen Messsignale ein, die nicht Nutzsignale sind und die die Auswertung erschweren. Die erfindungsgemäße Ausbildung des Garnsensors bewirkt, dass die Größe des Nutzsignals nicht von der Position des Fadens im Messfeld abhängig ist. Der Anteil des Nutzsignals am gesamten Messsignal wird durch die erfindungsgemäß eingesetzten und angeordneten Elemente größer. Daher können auch Fremdfasern sicher erkannt werden, die mit Verfahren und Vorrichtungen nach dem Stand der Technik nicht erkennbar waren. Dies schließt bei einer Ausbildung nach Anspruch 11 zum Beispiel auch Polypropylen(PP)-Fasern ein, deren Signalüberhöhung in der Regel geringer ist als der durch beispielsweise farbige Fremdfasern hervorgerufene Signaleinbruch. Dies ermöglicht eine gezielte Entfernung der PP-Fasern aus dem Garn und vermeidet damit das Entstehen von Qualitätsmängeln oder sogar von Ausschuss, wenn das Garn einem Färbeprozess unterworfen wird.

Mit einem erfindungsgemäßen Garnsensor wird die Qualität des Messergebnisses für die Fremdfasererkennung verbessert.

Weitere Einzelheiten der Erfindung sind den Darstellungen der Figuren entnehmbar.

### Es zeigt:

- Fig. 1: die Prinzipdarstellung einer Spinnstelle,
- Fig. 2: einen Garnsensor mit geöffnetem Gehäuse,
- Fig. 3: die Anordnung von Elementen des Garnsensors der Fig. 2,
- Fig. 4: die Prinzipdarstellung eines Lambertschen Flächenstrahlers.

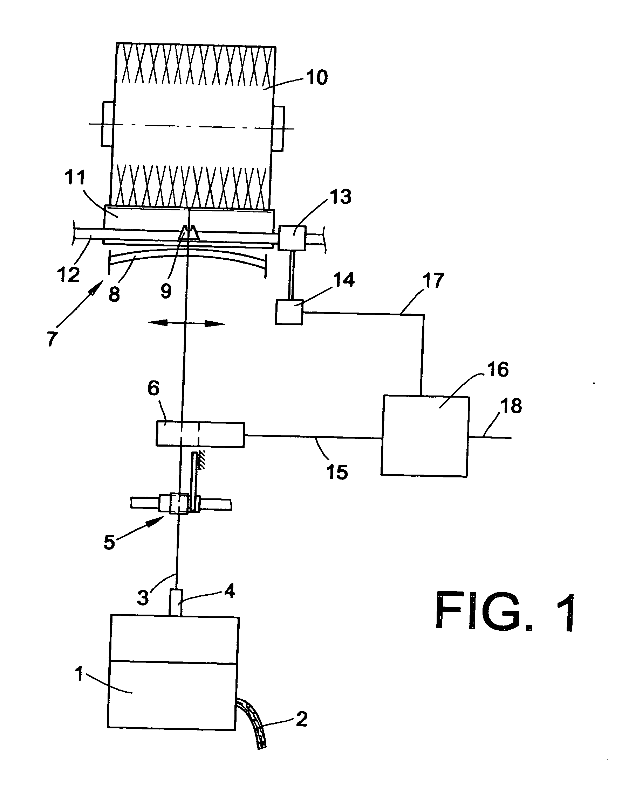

Fig. 1 zeigt eine Spinnbox 1 einer Open-End-Spinnmaschine, der ein Faserband 2 zugeführt wird. Das in der Spinnbox 1 erzeugte Garn 3 wird über das Abzugsröhrchen 4 mittels des Abzugswalzenpaares 5 abgezogen, durchläuft einen Garnsensor 6 und wird über einen Bügel 8 durch die Hin- und Herbewegung des Fadenführers 9 einer Changiereinrichtung 7 über eine vorgegebene Breite zu einer Kreuzspule 10 aufgewickelt. Die Kreuzspule 10 wird mittels einer Friktionswalze 11 angetrieben. Der Fadenführer 9 ist auf einer Fadenführerstange 12 befestigt, die von einem Fadenführergetriebe 13 hin- und herbewegt wird. Der Antrieb des Fadenführergetriebes 13 erfolgt durch eine Antriebseinrichtung 14. Der Garnsensor 6 zur Überwachung des laufenden Garns 3 ist oberhalb des Abzugswalzenpaares 5 im Changierbereich des Garns 3 angeordnet. In einer nicht dargestellten alternativen Ausführungsform kann der Garnsensor 6 dem Abzugswalzenpaar 5 vorgeordnet statt nachgeordnet sein. Der Garnsensor 6 ist über eine Leitung 15 mit der Steuerungseinrichtung 16 verbunden, die die vom Garnsensor 6 emittierten Signale empfängt. Über eine weitere Leitung 17 ist die Steuerungseinrichtung 16 mit der Antriebseinrichtung 14 verbunden. Die Antriebseinrichtung 14 ist als Elektromotor ausgeführt. Über die Leitung 18 ist die Steuerungseinrichtung 16 mit weiteren hier nicht dargestellten Spinnstellen, Datenverarbeitungseinrichtungen oder Spinnmaschinen verbunden.

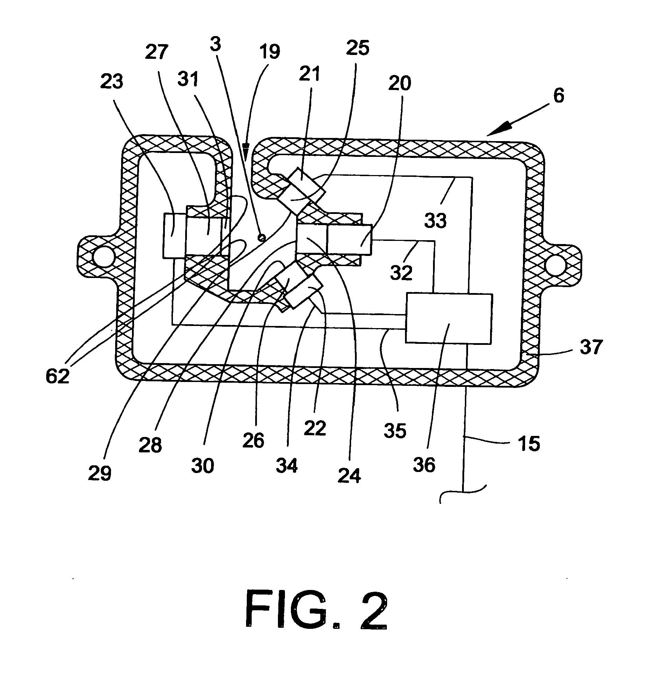

Der Fig. 2 ist die Lage einzelner Bestandteile des Garnsensors 6 zum Messspalt 19 und zum Garn 3 entnehmbar. Die als Leuchtdiode 20 ausgebildete Lichtquelle sowie die Fotodioden 21, 22, die dem Empfang vom Garn 3 reflektierten Lichtes dienen, sind in der Darstellung der Fig. 2 rechts vom Messspalt 19 positioniert. Die Fotodiode 23 zum Empfang des direkt von der Leuchtdiode 20 übertragenen Lichts ist in der Darstellung der Fig. 2 links vom Messspalt 19 positioniert. Zwischen der Leuchtdiode 20 und dem Messspalt 19 einerseits sowie zwischen dem Messspalt 19 und den Fotodioden 21, 22, 23 andererseits sind Elemente 24, 25, 26, 27 zum Übertragen des Lichts angeordnet. Die Elemente 24, 25, 26, 27 zum Übertragen des Lichts sind durch Fenster 28, 29, 30, 31 vom Messspalt 19 getrennt. Die Fenster können einen Schutz der Elemente 24, 25, 26, 27 zum Übertragen des Lichts vor Verschmutzung durch Staub und Faserflug bewirken. Die Leuchtdiode 20 und die Fotodioden 21, 22, 23 sind jeweils mittels der Leitungen 32, 33, 34, 35 mit einer Signalverarbeitungseinrichtung 36 verbunden. Die Signalverarbeitungseinrichtung 36 ihrerseits ist über die Leitung 15, die durch das Gehäuse 37 des Garnsensors 6 nach außen führt, mit der Steuerungseinrichtung 16 verbunden.

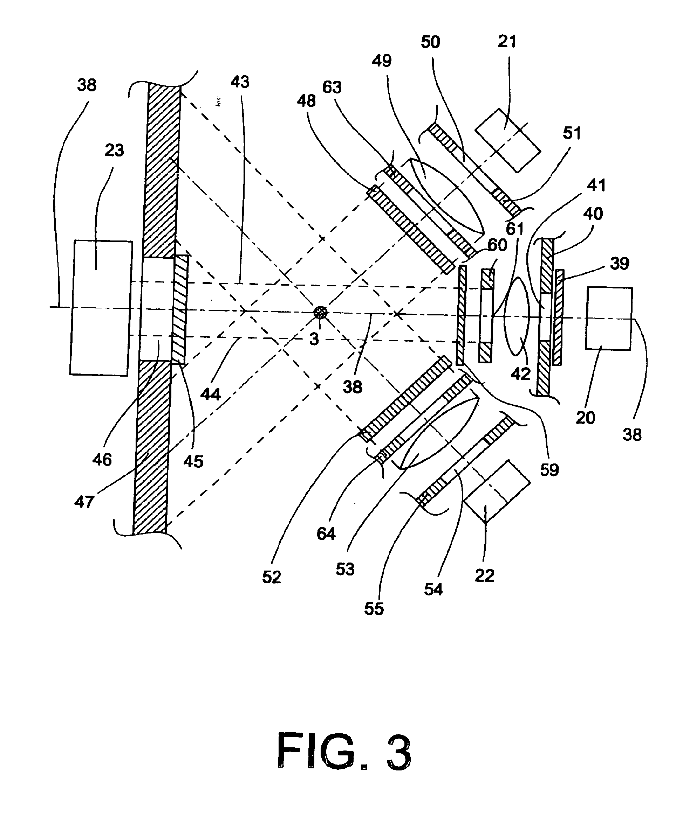

Fig. 3 zeigt eine Anordnung von Bauteilen des Garnsensors 6, der zur Erkennung von Fremdstoffen im Garn 3 geeignet ist. Als Lichtquelle dient die Leuchtdiode 20, die annähernd die Abstrahlcharakteristik eines Lambertschen Strahlers aufweist. Die Leuchtdiode 20 ist als Weißlichtleuchtdiode ausgebildet. Weißlichtleuchtdioden emittieren Licht mit breitem Emissionsspektrum. Auf den Einsatz von mehreren Leuchtdioden zur Emission unterschiedlicher Farben oder zur Verstärkung des emittierten Lichts kann bei Verwendung einer Weißlichtleuchtdiode verzichtet werden. Für Leuchtdioden ist die Kurzbezeichnung "LED" gebräuchlich. Das von der Leuchtdiode 20 emittierte Licht passiert das Element 24 zum Übertragen des Lichts. Das Element 24 umfasst eine Folie 39, eine Blende 40 mit der Blendenöffnung 41, eine Linse 42, eine Blende 60 mit rechteckiger Blendenöffnung 61 und eine Glasscheibe 59, die nacheinander vom Licht in Richtung der optischen Achse 38 durchquert werden. Die Blende 40 weist eine Blendenöffnung 41 mit einer Weite von 1 mm auf. Die Folie 39 strahlt divergente Lichtbündel ab und weist die Abstrahlcharakteristik eines Lambertschen Strahlers auf. Als Folie 39 kommt beispielsweise der Folientyp Oracal 8500 Serie translucent der Fa. K. Gröner zum Einsatz. Diese Folie wurde bisher für Werbeaufkleber eingesetzt und damit auf einem Einsatzgebiet, das völlig andersartig ist als ein Einsatz in einem Garnsensor zur Erhöhung der Messgenauigkeit wie bei der vorliegenden Erfindung. Nach der Linse 42 sind die einzelnen Lichtstrahlen quasiparallel zueinander in Richtung der optischen Achse 38 ausgerichtet und homogen über den Querschnitt des Gesamtlichtstrahls verteilt. Der Gesamtlichtstrahl ist durch die beiden gestrichelt dargestellten Linien 43, 44 repräsentiert. Die Folie 39 bildet eine virtuelle Lichtquelle, die im Unendlichen abgebildet wird. Auf dem Weg des Lichtbündels zwischen Linse 42 und der Bildebene der Fotodiode 23 ist immer das Abbild der virtuellen Lichtquelle vorhanden. Das Abbild ist jedoch unscharf. Dieser Effekt geht mit einer weiteren Homogenisierung des Lichtbündels einher. Das Garn 3 quert den Verlauf des Gesamtlichtstrahls und wird in Form einer Abschattung auf der Fotodiode 23 abgebildet. Zwischen dem Garn 3 und der Fotodiode 23 passiert der Gesamtlichtstrahl die Glasscheibe 45 sowie die Blendenöffnung 46 der Blende 47. Vom Garn 3 wird von der Leuchtdiode 20 emittiertes Licht reflektiert. Die Fotodioden 21, 22 erfassen einen Teil des reflektierten Lichtes. Zwischen Garn 3 und den Fotodioden 21, 22 passiert das reflektierte Licht jeweils die Elemente 25, 26. Die Elemente 25, 26 umfassen jeweils die zugehörige Glasscheibe 48, 52, die Blende 63,64, die Linse 49, 53 und die Blendenöffnung 50, 54 der Blende 51, 55. Die Elemente 25, 26 zur Übertragung des reflektierten Lichts sind so ausgebildet und angeordnet, dass durch die Fotodioden 21, 22 in Abwesenheit des Garns 3 jeweils Abbildungen der gegenüberliegenden Oberflächen, zum Beispiel der Blende 40 oder der Wand 62 des Messspaltes 19, erfassbar sind. Diese Oberflächen liegen beiderseitig außerhalb der von der direkten Strahlung der Leuchtdiode 20 beleuchteten Fläche der Wand 62 des Messspaltes 19.

Alternativ können die Blenden 51 und 55 auch entfallen. Die Glasscheiben 48, 52, 59 können in einer weiteren alternativen Ausführung als Blenden ausgebildet sein und rechteckige Blendenöffnungen aufweisen.

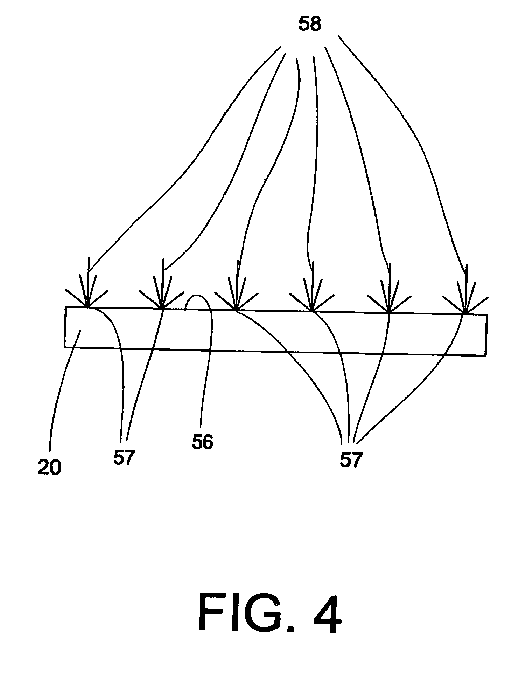

Fig. 4 zeigt die Prinzipdarstellung der Leuchtdiode 20, deren Licht abstrahlende Fläche 56 die Charakteristik eines Lambertschen Strahlers aufweist. Von jedem Punkt 57 der Fläche 56 wird ein divergentes Strahlenbündel 58 emittiert. Das Licht, das ein Lambertscher Strahler emittiert, lässt sich in ein homogenes Licht mit parallelem Strahlengang umwandeln, wobei die Homogenität und die Parallelität des Lichtes besser sind, als es der Fall ist, wenn übliche so genannte Punktlichtquellen eingesetzt werden.

## Patentansprüche

1. Garnsensor (6) zum optischen Abtasten eines in seiner Längsrichtung in einem Messspalt (19) bewegten Garnes (3), insbesondere zum Detektieren von Fremdfasern, bei dem ein Lichtstrahl aus einer Lichtquelle (20) in den Messspalt (19) gesendet wird, mit einem ersten Empfänger (23) für direkt übertragenes Licht, zwei weiteren Empfängern (21,22) für vom Garn reflektiertes Licht und Elementen (24, 25, 26, 27) zum Übertragen des Lichts zwischen Lichtquelle(20), Messspalt (19) und Empfängern (21, 22, 23),
**dadurch gekennzeichnet,**
**dass** das Licht übertragende Element (24), welches zwischen Lichtquelle (20) und Messspalt (19) angeordnet ist, in Strahlungsrichtung hinter der Lichtquelle (20) eine Blende (40) mit einer Blendenöffnung (41) und eine erste Linse (42) enthält, die so ausgebildet und angeordnet sind, dass die Blendenöffnung (41) zumindest annähernd im Unendlichen abgebildet wird und dass die das Licht übertragenden Elemente (25, 26), welche zwischen Messspalt (19) und Empfängern (21, 22) für reflektiertes Licht angeordnet sind, in Strahlungsrichtung des reflektierten Lichts vor den das reflektierende Licht erfassenden Empfängern (21, 22) jeweils eine so ausgebildete und angeordnete zweite Linse (49, 53) enthalten, dass durch die Empfänger (21, 22) in Abwesenheit des Garnes (3) jeweils Abbildungen auf der gegenüberliegenden Wand (62) des Messspaltes (19) erfassbar sind, die im Wesentlichen beiderseitig außerhalb der Abbildung der Lichtquelle (20) auf der gegenüberliegenden Wand (62) des Messspaltes (19) liegen.

2. Garnsensor nach Anspruch 1, **dadurch gekennzeichnet, dass** die Lichtquelle (20) eine Leuchtdiode ist, deren Abstrahlcharakteristik als Lambertscher Strahler bezeichnet ist.

3. Garnsensor nach Anspruch 2, **dadurch gekennzeichnet, dass** die Leuchtdiode (20) eine Weißlichtleuchtdiode ist.

4. Garnsensor nach einem der Ansprüche 1 bis 3, **dadurch gekennzeichnet, dass** zwischen der Lichtquelle (20) und der dieser vorgeschalteten Blende (40) ein Diffusor (39) angeordnet ist.

5. Garnsensor nach Anspruch 4, **dadurch gekennzeichnet, dass** der Diffusor (39) eine Folie ist, die aus der ankommenden Strahlung divergente Lichtbündel erzeugt.

6. Garnsensor nach einem der Ansprüche 1 bis 5, **dadurch gekennzeichnet, dass** die Eintrittsfläche der vor der Lichtquelle (20) angeordneten Linse (42) so ausgebildet ist, dass die Strahlung in Richtung der optischen Achse (38) der Linse (42) eine homogene Verteilung der Beleuchtungsstärke ausweist und die Austrittsfläche der Linse (42) so ausgebildet ist, dass die von der Eintrittsfläche der Linse (42) kommende Strahlung nahezu parallelisiert und quasiparallel zur optischen Achse (38) der Linse (42) abgestrahlt wird.

7. Garnsensor nach einem der Ansprüche 1 bis 6, **dadurch gekennzeichnet, dass** die Elemente (24, 25, 26, 27) zum Übertragen des Lichts durch Fenster (28, 29, 30, 31) vom Messspalt (19) getrennt sind.

8. Garnsensor nach einem der Ansprüche 1 bis 7, **dadurch gekennzeichnet, dass** zwischen der Linse (42) und dem Garn (3) eine Blende (60) mit rechteckiger Blendenöffnung (61) angeordnet ist.

9. Garnsensor nach einem der Ansprüche 1 bis 8, **dadurch gekennzeichnet, dass** im Strahlengang des vom Garn (3) reflektierten Lichtes zum Empfänger (21, 22) zwischen dem Garn (3) und der Linse (49, 53) eine Blende (63, 64) angeordnet ist.

10. Garnsensor nach Anspruch 9, **dadurch gekennzeichnet, dass** das Fenster (48, 52) als Blende ausgebildet ist.

11. Garnsensor nach einem der Ansprüche 1 bis 10, **dadurch gekennzeichnet, dass** eine Signalverarbeitungseinrichtung (36) darauf eingerichtet ist, neben den üblicherweise erkannten und ausgewerteten Signaleinbrüchen auch Signalüberhöhungen zu erkennen und auszuwerten.

## Claims

1. Yarn sensor (6) for optically scanning a yarn (3) travelling in its longitudinal direction in a measuring gap (19), in particular for detecting foreign fibres, in which a light beam is transmitted from a light source (20) into the measuring gap (19), comprising a first receiver (23) for directly transmitted light, two additional receivers (21, 22) for light reflected by the yarn and elements (24, 25, 26, 27) for transmitting light between the light source (20), measuring gap (19) and receivers (21, 22, 23),
**characterised in that**
the element (24) transmitting the light, which is arranged between the light source (20) and measuring gap (19), comprises in radiation direction behind the light source (20) a screen (40) comprising a screen opening (41) and a first lens (42), which are configured and arranged so that the screen opening (41) is projected at least almost to infinity, and **in that** the elements (25, 26) transmitting the light, which are arranged between the measuring gap (19) and receivers (21, 22) for reflected light, each comprise in radiation direction of the reflected light upstream of the receivers (21, 22) detecting the reflecting light a thus configured and arranged second lens (49, 53), **in that** by means of the receivers (21, 22) in the absence of the yarn (3) projected images on the opposite wall (62) of the measuring gap (19) can be detected, which are essentially on both sides outside the projected image of the light source (20) on the opposite wall (62) of the measuring gap (19).

2. Yarn sensor according to claim 1, **characterised in that** the light source (20) is a light-emitting diode having an emission characteristic of a Lambert emitter.

3. Yarn sensor according to claim 2, **characterised in that** the light-emitting diode (20) is a white light LED.

4. Yarn sensor according to any one of claims 1 to 3, **characterised in that** a diffuser (39) is arranged between the light source (20) and the screen (40) arranged upstream thereof.

5. Yarn sensor according to claim 4, **characterised in that** the diffuser (39) is a film for generating divergent beams of light from the incoming radiation.

6. Yarn sensor according to any one of claims 1 to 5, **characterised in that** the admission surface of the lens (42) arranged upstream of the light source (20) is configured so that the radiation has a homogenous distribution of light intensity in the direction of the optical axis (38) of the lens (42) and the discharge surface of the lens (42) is configured so that the radiation coming from the admission surface of the lens (42) is virtually parallelised and is radiated virtually parallel to the optical axis (38) of the lens (42).

7. Yarn sensor according to any one of claims 1 to 6, **characterised in that** the elements (24, 25, 26, 27) for transmitting light through windows (28, 29, 30, 31) are separated from the measuring gap (19).

8. Yarn sensor according to any one of claims 1 to 7, **characterised in that** a screen (60) with a rectangular screen opening (61) is arranged between the lens (42) and the yarn (3).

9. Yarn sensor according to any one of claims 1 to 8, **characterised in that** a screen (63, 64) is arranged in the beam path of the light reflected by the yarn (3) to the receiver (21, 22) between the yarn (3) and the lens (49, 53).

10. Yarn sensor according to claim 9, **characterised in that** the window (48, 52) is in the form of a screen.

11. Yarn sensor according to any one of claims 1 to 10, **characterised in that** a signal processing device (36) is set up to detect and evaluate signal exaggerations in addition to the usually recognised and evaluated signal incursion.

## Revendications

1. Détecteur de fil (6) pour la détection optique d'un fil (3) déplacé dans sa direction longitudinale dans une fente de mesure (19), en particulier pour la détection de fibres étrangères, dans lequel un rayon lumineux provenant d'une source de lumière (20) est envoyé dans la fente de mesure (19), comportant un premier récepteur (23) pour la lumière transmise directement, deux autres récepteurs (21, 22) pour la lumière réfléchie par le fil et des éléments (24, 25, 26, 27) pour transmettre la lumière entre source de lumière (20), fente de mesure (19) et récepteurs (21, 22, 23),
**caractérisé en ce**
**que** l'élément transmetteur de lumière (24) qui est disposé entre la source de lumière (20) et la fente de mesure (19) contient, derrière la source de lumière (20) dans la direction de rayonnement, un diaphragme (40) avec une ouverture de diaphragme (41) et une première lentille (42) qui sont conçus et disposés de telle sorte que l'ouverture de diaphragme (41) soit reproduite au moins approximativement à l'infini et que les éléments transmetteurs de lumière (25, 26) qui sont disposés entre la fente de mesure (19) et les récepteurs (21, 22) pour la lumière réfléchie contiennent, avant les récepteurs (21, 22) détectant la lumière réfléchie dans la direction de rayonnement de la lumière réfléchie, chacun une deuxième lentille (49, 53) conçue et disposée de telle sorte que les récepteurs (21, 22) permettent, en l'absence du fil (3), de détecter des reproductions sur la paroi opposée (62) de la fente de mesure (19) qui se situent sensiblement de chaque côté en dehors de la reproduction de la source de lumière (20) sur la paroi opposée (62) de la fente de mesure (19).

2. Détecteur de fil selon la revendication 1, **caractérisé en ce que** la source de lumière (20) est une diode électroluminescente dont la caractéristique de rayonnement est celle d'un émetteur de Lambert.

3. Détecteur de fil selon la revendication 2, **caractérisé en ce que** la diode électroluminescente (20) est une diode électroluminescente émettant une lumière blanche.

4. Détecteur de fil selon une des revendications 1 à 3, **caractérisé en ce qu'**un diffuseur (39) est disposé entre la source de lumière (20) et le diaphragme (40) placé en amont de celle-ci.

5. Détecteur de fil selon la revendication 4, **caractérisé en ce que** le diffuseur (39) est un film qui produit des faisceaux lumineux divergents à partir du rayonnement arrivant.

6. Détecteur de fil selon une des revendications 1 à 5, **caractérisé en ce que** la surface d'entrée de la lentille (42) disposée devant la source de lumière (20) est conçue de telle sorte que le rayonnement en direction de l'axe optique (38) de la lentille (42) présente une répartition homogène de l'intensité d'éclairement et la surface de sortie de la lentille (42) est conçue de telle sorte que le rayonnement venant de la surface d'entrée de la lentille (42) soit rendu quasiment parallèle et émis quasi parallèlement à l'axe optique (38) de la lentille (42).

7. Détecteur de fil selon une des revendications 1 à 6, **caractérisé en ce que** les éléments (24, 25, 26, 27) de transmission de la lumière sont séparés de la fente de mesure (19) par des fenêtres (28, 29, 30, 31).

8. Détecteur de fil selon une des revendications 1 à 7, **caractérisé en ce qu'**un diaphragme (60) avec ouverture de diaphragme rectangulaire (61) est disposé entre la lentille (42) et le fil (3).

9. Détecteur de fil selon une des revendications 1 à 8, **caractérisé en ce qu'**un diaphragme (63, 64) est disposé entre le fil (3) et la lentille (49, 53) dans le chemin optique de la lumière réfléchie par le fil (3) vers le récepteur (21, 22).

10. Détecteur de fil selon la revendication 9, **caractérisé en ce que** la fenêtre (48, 52) est réalisée sous la forme d'un diaphragme.

11. Détecteur de fil selon une des revendications 1 à 10, **caractérisé en ce qu'**un dispositif de traitement de signaux (36) est conçu pour, en plus des chutes de signal habituellement détectées et évaluées, également détecter et évaluer des hauteurs excessives de signal.
